# FASCICULE DE BREVET EUROPEEN

(11) **EP 0 737 602 B1**
(45) Date de publication et mention de la délivrance du brevet: **11.08.1999**
(21) Numéro de dépôt: 96400713.2
(22) Date de dépôt: 02.04.1996
(51) Int. Cl.: B60R 13/08, B32B 5/18

(54) **Protection de panneau de garnissage pour habitacle de véhicule**
Schutzanordnung einer Verkleidungsplatte eines Fahrzeuginnenraumes
Protective arrangement of a trim panel for vehicle compartment

(30) Priorité: 11.04.1995 FR 9504442
(43) Date de publication de la demande: 16.10.1996
(73) Titulaire: SOFITEC SA, 78530 Buc (FR)
(72) Inventeur: Proux, Georges, 78220 Viroflay (FR)
(74) Mandataire: Cabinet Martinet & Lapoux

(56) Documents cités:
- DE-A- 2 802 781
- FR-A- 2 398 603
- FR-A- 2 698 152
- DATABASE WPI Section Ch, Derwent Publications Ltd., London, GB; Class A95, AN 71-19963S XP002009168 & JP-B-46 010 590 ( TOYATA VEHICLES CO LTD)
- PATENT ABSTRACTS OF JAPAN vol. 011, no. 068 (P-553), 28 Février 1987 & JP-A-61 230136 (KONISHIROKU PHOTO IND CO LTD), 14 Octobre 1986,
- PATENT ABSTRACTS OF JAPAN vol. 010, no. 018 (M-448), 24 Janvier 1986 & JP-A-60 176731 (INOUE EMU TEE PII KK), 10 Septembre 1985,
- DATABASE WPI Section Ch, Week 9515 Derwent Publications Ltd., London, GB; Class A25, AN 95-110109 XP002009189 & JP-A-07 032 527 (TOYO RUBBER IND CO LTD) , 3 Février 1995

## Description

La présente invention concerne la protection d'un panneau mince de garnissage à interposer entre une tôle de carrosserie et une garniture dans l'habitacle d'un véhicule.

Un tel panneau est décrit dans la demande de brevet français FR-A-2 698 152 déposée par le demandeur et comprend une mince feuille en mousse de polymère dont une face est recouverte par et intimement liée à un film en polymère étanche à l'eau. Ce panneau est utilisé pour étanchéifier l'habitacle d'un véhicule au niveau du caisson d'une portière. Le panneau est tendu sensiblement parallèlement aux coulisses de guidage de la vitre de la portière, et appliqué contre une face de la portière située à l'intérieur de l'habitacle du véhicule.

Afin que le panneau soit sensiblement fixé à des endroits prédéterminés contre la tôle du caisson de portière, lors de la pose du panneau, le film étanche à l'eau est enduit d'une couche ou d'un cordon adhésif ayant un pouvoir adhésif permanent et revêtu selon la technique antérieure d'un produit de protection temporaire amovible.

Le produit de protection est une feuille en papier protecteur anti-adhérent, tel que papier siliconé. La feuille en papier est appliquée contre la face adhésive du film étanche à l'eau lors de la fabrication du complexe adhésif ou lors de la fabrication du panneau lui-même. La feuille en papier protecteur évite que le panneau adhère à d'autres objets, particulièrement avec d'autres panneaux empilés à plat pendant le transport du panneau entre le lieu de fabrication et le lieu de pose.

Un article composite à pellicule plastique et renforcement enduit d'une couche adhésive pour papier protecteur enduit de silicone est décrit dans la demande de brevet DE-A-2 398 603.

Toutefois, la feuille en papier protecteur peut offrir une surface plane imparfaite, jonchée de plis et bourrelets qui sont dus à un froissage et/ou séchage du papier lors du processus d'adhésivage du papier sur le panneau. Les imperfections de surface de la feuille en papier protecteur appliquée affaiblissent, voire suppriment, partiellement l'adhésivité de la couche adhésive, ce qui est nuisible à la pose ultérieure du panneau sur la tôle de caisson. De plus, la feuille en papier protecteur est à retirer avant la fixation du panneau de garnissage contre la tôle du caisson de portière, ce qui implique une opération à répéter pour chaque portière.

Un panneau comprenant une plaque en mousse avec une couche de colle qui est recouverte par une feuille de protection siliconée, à la place d'une feuille en papier protecteur autoadhérent, est décrit dans la demande de brevet DE-A-2 802 781. Ce panneau offre des inconvénients analogues à ceux du panneau précédent à feuille en papier protecteur.

La présente invention vise à fournir un panneau de garnissage prêt au transport et prêt à être monté oui ne nécessite pas de produit de protection temporaire amovible, ce qui élimine les opérations de pose et de retrait de ce produit de protection.

A cette fin, un panneau de garnissage à interposer entre une tôle de carrosserie et une garniture dans un véhicule, comprenant une feuille en mousse, un film étanche à l'eau intimement lié à la feuille et une couche adhésive ayant un pouvoir adhésif permanent, déposée sur une face de film constituant une première face du panneau est caractérisé en ce qu'un revêtement de protection anti-adhérent est situé sur la face de la feuille en superposition avec un autre panneau de garnissage de façon à ce que le revêtement de protection anti-adhérent soit en regard de la couche adhésive de la première face de l'autre panneau. En d'autres termes, le revêtement de protection et la couche adhésive, telle qu'un cordon de colle, sont situés respectivement sur les deuxième et première faces du panneau de garnissage afin que lorsque deux panneaux de garnissage sont superposés, le revêtement de protection de l'un des panneaux soit au contact de la couche adhésive de l'autre panneau.

De préférence, le revêtement de protection est à base de silicone, ou à base de dérivé fluoré, tel que tétra-fluoroéthylène.

D'autres avantages et caractéristiques de la présente invention apparaîtront plus clairement à la lecture de la description suivante de plusieurs réalisations préférées de l'invention et des dessins annexés dans lesquels :
- la figure 1 est une vue en coupe verticale schématique d'une portière d'automobile contenant un panneau de garnissage selon la technique antérieure ;
- la figure 2 est une vue en coupe transversale détaillée d'une portion du panneau de garnissage selon la technique antérieure lorsqu'il est posé comme montré à la figure 1 ; et
- la figure 3 est une vue en perspective de deux panneaux de garnissage selon l'invention, prêts à être transportés.

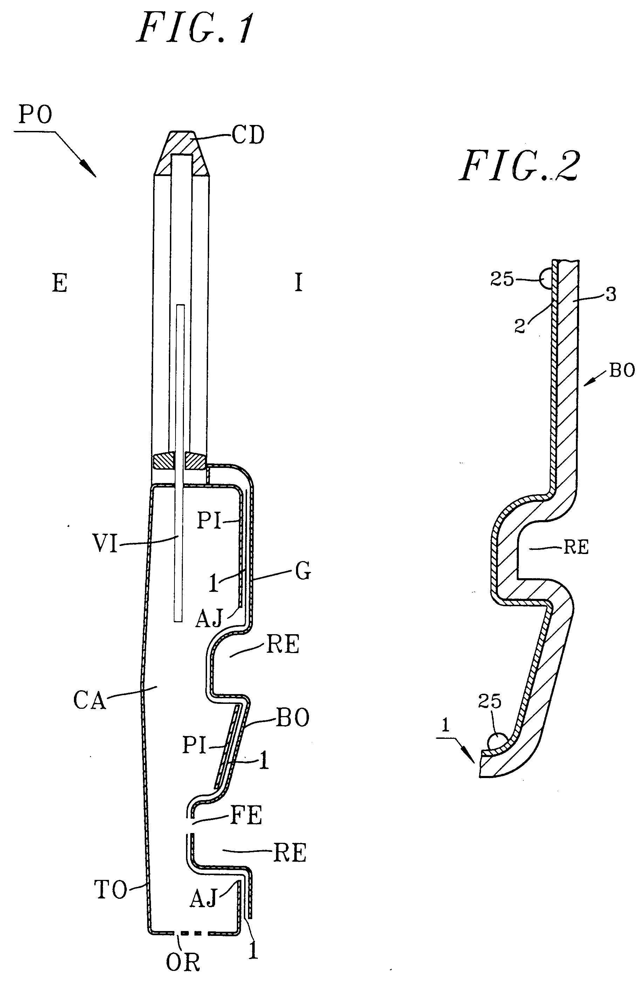

Dans la figure 1, on reconnaît la tôle porteuse emboutie TO d'une portière PO de véhicule, tel qu'automobile, ici relative au côté droit vu de l'avant du véhicule, l'extérieur E et l'intérieur I du véhicule étant situés à gauche et à droite dans la figure 1 respectivement. La portière PO présente en partie supérieure, un double cadre CD avec joint lécheur caoutchouté à fermer par une vitre VI, et en partie inférieure un caisson CA. Dans le caisson sont logés notamment un lève-vitre manuel ou électrique, des organes de commande d'ouverture de portière, tels que tringle de poignée extérieure, tirette et électromécanisme de condamnation de portière, un haut-parleur, ou des organes de commande de rétroviseur (non représentés). Lorsque le lève-vitre est actionné, la vitre VI descend dans le caisson CA pour ouvrir le cadre CD, ou bien remonte à partir du caisson CA pour fermer le cadre CD.

Du côté intérieur I au véhicule, le caisson inférieur CA de la portière PO est fermé par une garniture interne G moulée rigide, le plus souvent en matière plastique. Cette garniture constitue un revêtement interne d'habillage de l'habitacle du véhicule et possède divers bossages BO et renfoncements RE, par exemple formant un accoudoir et un vide-poche ou un logement de haut-parleur. Les bossages et renfoncements sont en regard avec ou logés dans un ou des ajours AJ de la paroi intérieure du caisson CA. En outre, la garniture G offre des fentes FE et lumières pour le passage de câbles électriques, tringles ou autres pièces mécaniques servant notamment à la commande du lève-vitre logé dans le caisson CA, à la fermeture de la portière et le cas échéant au réglage du rétroviseur.

Dans le caisson CA peuvent ruisseler des gouttelettes d'eau provenant principalement de la face extérieure de la vitre VI, à travers le joint lécheur du cadre CD et/ou suite à l'abaissement de la vitre VI dans le caisson. Les gouttelettes d'eau s'écoulent vers l'extérieur par de petits orifices OR pratiqués en partie inférieure du caisson de portière, après avoir cheminé notamment sur les parois du caisson, y compris sur la paroi intérieure ajourée de la tôle de caisson.

Selon un premier type connu, un panneau composite souple de garnissage est composé d'une feuille en mousse de polymère et d'un film en polymère. Le panneau souple est tendu contre approximativement la paroi PI sensiblement plane du caisson CA située vers l'intérieur de l'habitacle, en fermant les ajours AJ, et est appliqué contre des bords du caisson recouverts par le pourtour de la garniture G et au moins partiellement contre la paroi intérieure ajourée PI du caisson. Le film du panneau est en regard de l'intérieur du caisson CA et donc de la vitre en position basse, et contribue à l'étanchéité de l'habitacle du véhicule.

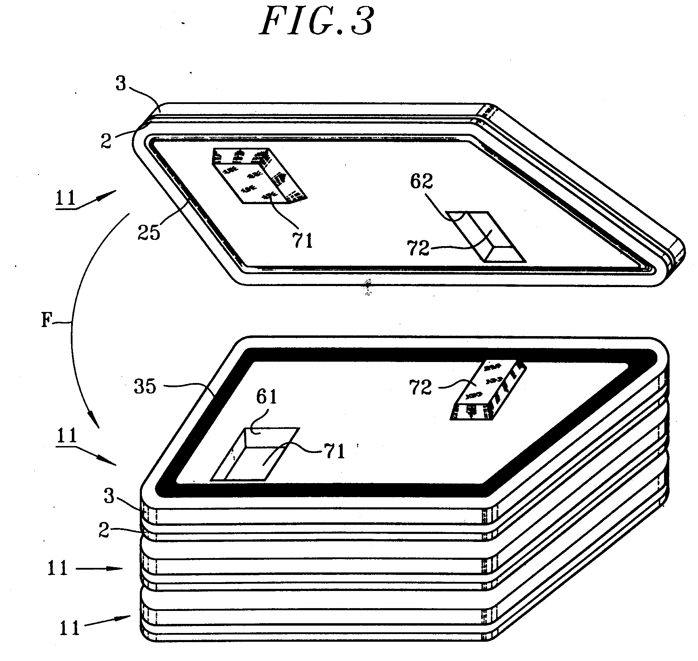

Selon un second type montré à la figure 2 et connu par la demande de brevet français FR-A-2 698 152 considérée comme contenue entièrement dans la présente demande de brevet, un panneau composite 1 est en matière semi-rigide thermoformée. Les deux composants du panneau composite sont un film en polymère 2 étanche à l'eau et une feuille en mousse de polymère 3 plus épaisse que le film 2. Le film 2 et la feuille 3 sont tous deux thermoformables. Le panneau 1 après avoir subi préalablement un thermoformage épouse sensiblement la forme de la face extérieure de la garniture et particulièrement les bosses BO et renfoncements RE de celle-ci, comme montré à la figure 1. Par suite, le panneau 1 pénètre dans le caisson CA lorsqu'une bosse de la garniture traverse un ajour AJ, comme montré en RE dans la figure 1, et peut être en retrait du caisson ou appliqué contre le caisson lorsqu'un creux de garniture est en regard de la face extérieure du caisson, comme montré en BO dans la figure 1. Le panneau est également appliqué contre les bords du caisson recouverts par la garniture et contre la paroi intérieure PI ajourée du caisson CA.

Le panneau est lié à la paroi intérieure PI du caisson en regard de la garniture, par une couche adhésive préencollant le film étanche à l'eau 2. La couche adhésive est un cordon de colle 25 selon la réalisation illustrée à la figure 2. Le cordon de colle 25 a un contour tel que le cordon de colle entre en contact avec le caisson lorsque le panneau 1 est appliqué contre le caisson CA de la portière PO. Le cordon de colle a une épaisseur entre environ 1 et 5 millimètres. En variante, la couche adhésive est une bande ou un cordon adhésif ayant un contour prédéterminé sur le film 2, ou bien encore est un film revêtant une partie ou la totalité de la surface du film 2.

En référence à la figure 3, des panneaux identiques 11 prêts au transport selon l'invention présentent par exemple un contour sensiblement quadrilatéral, correspondant à la face ajourée du caisson CA de la portière à l'intérieur du véhicule. Chaque panneau 11 comprend le film en polymère étanche à l'eau 2 et la feuille en mousse de polymère 3. Selon la réalisation illustrée, chaque panneau 11 est sensiblement plan et comporte des ouvertures 61 et 62 qui sont fermées par des coques respectives 71 et 72. Les panneaux sont à empiler l'un sur l'autre comme indiqué par la flèche F. En pratique, des empilements de plusieurs dizaines de panneaux identiques sont réalisés pour le stockage et le transport des panneaux.

Les coques 71 et 72 peuvent être rapportées et fixées aux ouvertures 61 et 62. Selon une autre variante, lorsque la feuille en mousse 3 et le film étanche à l'eau 2 sont thermoformables, les coques 71 et 72 sont thermoformées avec le panneau 11. La coque 72 correspond à un bossage BO et saille vers l'intérieur de l'habitacle du véhicule. La coque 71 correspond à un renfoncement RE et saille vers l'extérieur du véhicule, c'est-à-dire à l'intérieur du caisson CA. Les coques sont en polymère semi-rigide ou en tout autre matière thermoformable. Elles peuvent présenter des caractéristiques particulières par rapport à la feuille 3 : par exemple leurs épaisseurs sont différentes de celle du panneau, et/ou les coques sont transparentes alors que la feuille 3 est opaque. Le fond de la coque 71 peut être ajouré pour y loger un haut-parleur.

La feuille en mousse de polymère 3 est fabriquée par exemple en polyéthylène, polypropylène ou polyuréthane, ou en caoutchouc synthétique, tel que Néoprène, etc. Elle peut être en micro-fibres plastiques et film non-tissé. Le film en polymère étanche à l'eau 2 est transparent ou opaque et recouvre une face de la feuille 3 et a une épaisseur de l'ordre du dixième de millimètre. Le film est intimement lié à la feuille soit par flammage, c'est-à-dire chauffage de la mousse et pose du film sur la mousse chauffée, soit par l'intermédiaire d'un moyen de liaison, tel qu'adhésif ou colle.

Le cordon de colle 25 est déposé classiquement sur une face inférieure du film 2 constituant une première face de chaque panneau 11 en suivant sensiblement le contour extérieur du panneau 11 et, le cas échéant, le contour des ouvertures 61 et 62.

Un revêtement de protection 35 est déposé sur une face supérieure de la feuille 3 constituant une deuxième face du panneau, en superposition du cordon de colle 25. Le revêtement de protection 35 est anti-adhérent et est réalisé par l'application sur la feuille 3 d'un vernis à base de silicone ou à base d'un dérivé fluoré tel que tétra-fluoroéthylène (PTFE). Selon une autre réalisation, le revêtement 35 est un film par nature anti-adhérent, par exemple à base de dérivés fluorés, collé sur la feuille 3, ou encore est un film en polyéthylène dont une face est collée sur la feuille 3 et l'autre face est revêtue d'un traitement anti-adhérent. Le revêtement de protection 35 suit sensiblement le cordon de colle 25 de manière à ce que le revêtement 35 et le cordon 25 soient superposés lors de l'empilement des panneaux 11. En variante, le revêtement de protection 35 recouvre toute la surface de la feuille 3 quelle que soit la surface du cordon de colle 25 à protéger.

Lorsque les panneaux 11 sont empilés pour stockage ou transport, le cordon de colle 25 de l'un supérieur des panneaux vient en contact avec le revêtement de protection 35 de l'autre inférieur des panneaux. Ainsi, les panneaux de garnissage selon l'invention sont empilables les uns sur les autres sans feuille de protection temporaire grâce à leur constitution par une face adhésive et la face opposée anti-adhérente, la face adhésive étant protégée par la face anti-adhérente.

## Revendications

1. Panneau de garnissage à interposer entre une tôle de carrosserie (TO, CA) et une garniture (G) dans un véhicule, comprenant une feuille en mousse (3), un film étanche à l'eau (2) intimement lié à la feuille (3) et une couche adhésive (25) ayant un pouvoir adhésif permanent, déposée sur une face de film (2) constituant une première face du panneau, caractérisé en ce qu'un revêtement de protection anti-adhérent (35) est situé sur une face de la feuille (3) en superposition avec un autre panneau de garnissage de façon à ce que le revêtement de protection anti-adhérent (35) soit en regard de la couche adhésive (25) de la première face de l'autre panneau.

2. Panneau de garnissage conforme à la revendication 1, dans lequel le revêtement de protection (35) est à base de silicone.

3. Panneau de garnissage conforme à la revendication 1, dans lequel le revêtement de protection (35) est à base de dérivés fluorés.

## Claims

1. Lining panel to be interposed between a bodywork panel (TO, CA) and a lining (G) in a vehicle, comprising a sheet of foam (3), a water-tight film (2) closely bonded to the sheet (3) and an adhesive layer (25) having permanent adhesive power, deposited on a surface of the film (2) constituting a first side of the panel, characterised in that a non-stick protective coating (35) is provided on one side of the sheet (3), superimposed with another lining panel so that the non-stick protective coating (35) is facing the adhesive layer (25) of the first side of the other panel.

2. Lining panel according to claim 1, wherein the protective coating (35) is silicone-based.

3. Lining panel according to claim 1, wherein the protective coating (35) is based on fluorine derivatives.

## Patentansprüche

1. Auskleidungsplatte zum Einsetzen zwischen ein Karosserieblech (TO, CA) und eine Verkleidung (G) in einem Fahrzeug, bestehend aus einer Tafel aus Schaumstoff (3), einer wasserdichten Folie (2), die mit der Tafel (3) fest verbunden ist, und einer Klebschicht (25), die dauerhafte Klebkraft aufweist und auf einer Seite der Folie (2) aufgetragen ist, die eine erste Seite der Platte darstellt, dadurch gekennzeichnet, dass sich eine nicht klebende Schutzbeschichtung (35) auf einer Seite der Tafel (3) befindet, mit einer anderen Auskleidungsplatte übereinanderliegend, derart, dass sich die nicht klebende Schutzbeschichtung (35) der Klebschicht (25) der ersten Seite der anderen Platte gegenüber befindet.

2. Auskleidungsplatte nach Patentanspruch 1, bei der die nicht klebende Schutzbeschichtung (35) auf der Basis von Silikon hergestellt wurde.

3. Auskleidungsplatte nach Patentanspruch 1, bei der die nicht klebende Schutzbeschichtung (35) auf der Basis fluorierter Derivate hergestellt wurde.
